# EUROPÄISCHE PATENTANMELDUNG

(11) **EP 3 761 206 A1**
(43) Veröffentlichungstag der Anmeldung: **06.01.2021**
(21) Anmeldenummer: 19184493.5
(22) Anmeldetag: 04.07.2019
(51) Int. Cl.: G06F 21/64, G06F 21/60

(54) **COMPUTERIMPLEMENTIERTE VORRICHTUNG UND COMPUTERIMPLEMENTIERTES VERFAHREN ZUR ÜBERPRÜFUNG DER INTEGRITÄT VON ELEKTRONISCHEN DATEIEN**

(71) Anmelder: Live Service GmbH, 6000 Luzern 2 (CH)
(72) Erfinder: SCHUITEMAKER, Ronald A., 6012 Obernau (CH)
(74) Vertreter: Keller Schneider Patent- und Markenanwälte AG (Zürich)

(57) **Zusammenfassung**

Eine computerimplementierte Vorrichtung (AP, AP1) zur Überprüfung der Integrität von elektronischen Dateien ist eingerichtet, um eine Baumstruktur zu definieren, welche ausgehend von einer Wurzel (dV) in mehrere Knoten (T1, ...; T1-1, ...; T1-1-1, ...; ...) und in mehrere Blätter (Tx-y-z-A1, Tx-y-z-A2, ..., Tx-y-z-Am) verzweigt, wobei den Blättern (Tx-y-z-A1, Tx-y-z-A2, ..., Tx-y-z-Am) jeweils Benutzerkonten zugeordnet sind, in welchen Datei-Hashes von elektronischen Dateien eines betreffenden Benutzers abspeicherbar sind, und um einen der Wurzel (dV) zugeordneten Tageswert entsprechend den Datei-Hashes der Benutzerkonten und entsprechend der Baumstruktur zu bestimmen.

## Beschreibung

### Technisches Gebiet

Die Erfindung betrifft eine computerimplementierte Vorrichtung und ein computerimplementiertes Verfahren zur Überprüfung der Integrität von elektronischen Dateien.

### Technischer Hintergrund

Die Integrität von elektronischen Dateien ist eines von mehreren Zielen der Informationssicherheit. In verschiedenen Szenarien und Anwendungen muss für elektronische Dateien überprüft werden können, ob zu einem bestimmten späteren Zeitpunkt Y eine bestimmte elektronische Datei DY mit einer zu einem früheren Zeitpunkt X erstellten elektronischen Datei DX übereinstimmt, und zwar ohne dass der Eigentümer der zum früheren Zeitpunkt X erstellten elektronischen Datei DX sensible Daten oder den Inhalt offen legen muss.

In elektronischen Dateien können Daten abgespeichert sein, welche Dokumente, Bilder, Musik, Filme, Konfigurationsangaben, Programme, etc. betreffen. Die nachfolgenden Beispiele illustrieren einen kleinen Bruchteil von möglichen Szenarien und Anwendungen, bei welchen die Integrität von elektronischen Dateien überprüft werden muss.

Im Umfeld von Banken besteht die Vorgabe, Zugriffsrechte in sogenannten Log-Dateien abzuspeichern. Nach ein paar Jahren zu einem späteren Zeitpunkt Y muss bei einer Untersuchung bewiesen werden, dass eine zu einem früheren Zeitpunkt X abgespeicherte Log-Datei nicht manipuliert worden ist.

Ein Erfinder stellt seine Idee, welche in einer zu einem früheren Zeitpunkt X abgespeicherten Präsentationsdatei festgehalten ist, einem potentiellen Lizenznehmer vor. Zu einem späteren Zeitpunkt Y behauptet der potentielle Lizenznehmer, dass er die Idee selber gehabt hat. Ohne ein "Non Disclosure Statement" (NDA) ist das Gegenteil nicht beweisbar.

Ein Fotograf erstellt zu einem früheren Zeitpunkt X eine Bilddatei, von welcher nachfolgend etliche Kopien mit manipulierten Metadaten in Umlauf gebracht werden. Zu einem späteren Zeitpunkt Y will der Fotograf im Rahmen einer gerichtlichen Auseinandersetzung beweisen, dass er der Urheber der Bilddatei ist.

Die Urheber von Zitaten, literarischen Werken, Musikstücken, Logos, grafischen Werken, Ideen, Handnotizen, Tonaufnahmen, Videos, etc. sind immer wieder damit konfrontiert, die Urheberschaft beweisen zu müssen, um sich gegenüber Plagiaten, Diebstahl, Verfälschungen, Manipulationen, etc. schützen zu können.

Für zeitrelevante Projektabschlüsse (z.B. Universitätsarbeiten) muss bewiesen werden können, dass die das Projekt betreffenden Dateien ab einem bestimmten Zeitpunkt X nicht mehr verändert wurden, insbesondere falls ein Projektabschluss für den beispielsweise eingeschriebenen Versand per Post zu umfangreich ist oder ein Versand nicht möglich ist.

Es ist bekannt, digitale Textdokumente mit einer elektronischen Signatur zu unterschreiben und eventuell sogar zu validieren. Dies erfordert die Registrierung des Benutzers, meistens bei einer Behörde, um einen elektronischen Schlüssel zu erhalten. So zum Beispiel in der Schweiz der Schlüssel von SuisseID, der bei der Post erhältlich ist. Der Inhaber kann diesen dann unter anderem auf der Plattform easyGov der Schweizerischen Eidgenossenschaft (Bundesbehörde) benutzen, um Dokumente, wie z.B. PDF Dokumente (PDF: Portable Document Format), zu signieren und validieren. Diese Plattform wird momentan hauptsächlich von Anwälten benutzt und ist auf den Austausch von Schriftstücken konzentriert.

Andersartige Dokumente als digitale Textdokumente zu signieren, wie z.B. ein Musikstück, besteht auf solchen Registrierungsplattformen nicht. Zwar ermöglicht Pretty Good Privacy (PGP) die Verschlüsselung und Validierung aufgrund des Austausches von Schlüsselpaaren zwischen zwei Parteien. Ein validierter Zeitpunkt existiert jedoch nicht und kann nicht erzeugt werden. Die Benutzer derartiger Registrierungsplattformen, welche einen validierten Zeitpunkt sicherstellen können, müssen ferner (neben der Registrierung zum Erhalt eines elektronischen Schlüssels) komplizierte Anmeldungsprozesse vornehmen, um die Plattform benutzen zu können. Hinzu kommt, dass bei dieser Art von Signieren eines Dokuments das Dokument zwingend hochgeladen werden muss, damit es vor Ort gehasht werden kann und damit eine Bestätigung stattfindet. Das lokale Signieren eines digitalen Textdokuments mit einer elektronischen Signatur stellt nicht sicher, dass das digitale Textdokument zu einem früheren Zeitpunkt X existiert hat, da beispielsweise zu einem späteren Zeitpunkt Y mit einem Computer dessen Zeit auf den früheren Zeitpunkt X gestellt ist die elektronische Signatur mit Zeitstempel gefälscht werden kann.

Eine kryptologische Hashfunktion oder kryptographische Hashfunktion ist eine spezielle Form einer Hashfunktion (Streuwertfunktion), welche kollisionsresistent ist. Es ist also praktisch nicht möglich, zwei unterschiedliche Eingabewerte zu finden, die einen identischen Hashwert ergeben. Anwendungsgebiete kryptologischer Hashfunktionen sind vor allem Integritätsprüfung von Dateien oder Nachrichten, die sichere Speicherung von Passwörtern und digitale Signaturen. Weiterhin können sie als Pseudo-Zufallszahlengeneratoren oder zur Konstruktion von Blockchiffren eingesetzt werden (https://de.wikipedia.org/wiki/Kryptographische_Hashfunktion). Nachfolgend werden die Begriffe "Hash" (Einzahl), "Hashes" (Mehrzahl) und "Hashfunktion" verwendet, da die deutschen Begriffe "Streuwert" (Einzahl), "Streuwerte" (Mehrzahl) und "Streuwertfunktion" weniger gebräuchlich sind.

US20090037491A1 zeigt ein System, um einen Hash-Baum in einer geschützten Umgebung zu aktualisieren. Ein Integritätsschutzcontroller ist vorgesehen, um einen oder mehrere Systemparameter eines Speichersystems und einen oder mehrere Hashbaumparameter der Hashbäume zu beobachten und um einen Hashbaum in Abhängigkeit von dem Speichersystemparameter und dem Hashbaumparameter zu aktualisieren.

### Darstellung der Erfindung

Eine Aufgabe der vorliegenden Erfindung ist es, eine computerimplementiere Plattform und ein computerimplementiertes Verfahren zu schaffen, welche zumindest gewisse Nachteile des Standes der Technik überwinden. Es ist insbesondere eine Aufgabe der vorliegenden Erfindung eine computerimplementiere Plattform und eine computerimplementiertes Verfahren zu schaffen, welche die Überprüfung der Integrität von elektronischen Dateien ermöglichen, wobei der Eigentümer einer elektronischen Datei keine sensible Daten oder den Inhalt offen legen muss. Es ist insbesondere eine Aufgabe der vorliegenden Erfindung eine computerimplementiere Plattform und eine computerimplementiertes Verfahren zu schaffen, welche die Überprüfung der Integrität von elektronischen Dateien ermöglichen, wobei der Eigentümer einer elektronischen Datei keine komplizierten Behördengänge oder Registrierungsprozesse vornehmen muss. Es ist insbesondere eine Aufgabe der vorliegenden Erfindung eine computerimplementiere Plattform und eine computerimplementiertes Verfahren zu schaffen, welche die Überprüfung der Integrität von elektronischen Dateien ermöglichen, wobei sichergestellt ist, dass eine betreffende elektronische Datei zu einem früheren Zeitpunkt X existierte.

Der Umfang von Anwendungen der erfindungsgemässen computerimplementieren Plattform und des erfindungsgemässen computerimplementiertes Verfahrens zur Überprüfung der Integrität von elektronischen Dateien ist wesentlich grösser als in den obigen Beispielen illustriert. Insbesondere können vor Gericht Unsicherheiten und Streitigkeiten behoben werden, wie auch die Echtheit einer Software bestätigt werden.

Eine erfindungsgemässe computerimplementierte Vorrichtung zur Überprüfung der Integrität von elektronischen Dateien ist eingerichtet, um eine Baumstruktur zu definieren, welche ausgehend von einer Wurzel in mehrere Knoten und in mehrere Blätter verzweigt, wobei den Blättern jeweils Benutzerkonten zugeordnet sind, in welchen Datei-Hashes von elektronischen Dateien eines betreffenden Benutzers abspeicherbar sind, und um einen der Wurzel zugeordneten Tageswert entsprechend den Datei-Hashes der Benutzerkonten und entsprechend der Baumstruktur zu bestimmen. Die Übereinstimmung des Tageswerts zu einem späteren Zeitpunkt Y mit dem Tageswert zu einem früheren Zeitpunkt X zeigt an, dass die Integrität einer elektronischen Datei gewährleistet ist. Die Definition einer Baumstruktur mit mehreren Knoten und Blätter gewährleistet eine hohe Sicherheit bei der Überprüfung der Integrität einer elektronischen Datei. Die den Blättern zugeordneten Benutzerkonten gewährleisten einen einfachen Zugang für Benutzer. Die Möglichkeit, in den Benutzerkonten Datei-Hashes abzuspeichern gewährleistet, dass der Benutzer keine sensiblen Daten oder den Inhalt offenlegen muss. Die erfindungsgemässe Plattform funktioniert länderübergreifend und ist behördenunabhängig. Sie steht jedem zu jeder Zeit an jedem Ort zur Verfügung. Einer späteren Manipulation wird nur schon durch die Öffentlichkeit entgegengewirkt.

In einer Ausführungsform ist die computerimplementierte Vorrichtung weiter eingerichtet, um den Tageswert öffentlich zu publizieren. Dadurch kann festgestellt werden, ob ein betreffender Tageswert manipuliert wurde, wodurch die Sicherheit bei der Überprüfung der Integrität von elektronischen Dateien verbessert wird.

In einer Ausführungsform ist die computerimplementierte Vorrichtung weiter eingerichtet, um den Knoten Hashes zuzuordnen, welche auf Hashes von Knoten oder Blättern basiert, in welche der betreffende Knoten verzweigt, und um den Tageswert basierend auf den Hashes der Knoten oder Blätter zu bestimmen, in welche die Wurzel verzweigt. Durch das Zuordnen von Hashes zu den Knoten wird die Sicherheit bei der Überprüfung der Integrität von elektronischen Dateien verbessert.

In einer Ausführungsform ist die computerimplementierte Vorrichtung weiter eingerichtet, um Datei-Hashes von elektronischen Dateien abzuspeichern, welche auf einer beliebigen Hashfunktion basieren. Dadurch wird die Anwendung für den Benutzer vereinfacht, da der Benutzer beliebige verfügbare Hashfunktionen zur Überprüfung der Integrität von elektronischen Dateien anwenden kann.

In einer Ausführungsform ist die computerimplementierte Vorrichtung weiter eingerichtet, um Knoten zugeordnete Hashes auf der Basis einer Hashfunktion zu bestimmen, welche zumindest schwach kollisionsresistent ist. Dadurch wird die Sicherheit bei der Überprüfung der Integrität von elektronischen Dateien verbessert.

In einer Ausführungsform ist die computerimplementierte Vorrichtung weiter eingerichtet, um die Baumstruktur in einer Form zu definieren, bei welcher Knoten in mehreren Ebenen angeordnet sind. Dadurch wird die Zuverlässigkeit verbessert, der Aufbau bzw. die Programmierung der computerimplementierten Vorrichtung vereinfacht werden kann.

In einer Ausführungsform ist die computerimplementierte Vorrichtung weiter eingerichtet, um mindestens zwei Ebenen zu definieren. Dadurch wird die Sicherheit bei der Überprüfung der Integrität von elektronischen Dateien verbessert.

In einer Ausführungsform ist die computerimplementierte Vorrichtung weiter eingerichtet, um für mindestens einen Knoten mindestens zwei Knoten zu definieren, in welche sich der betreffende Knoten verzweigt. Dadurch wird die Sicherheit bei der Überprüfung der Integrität von elektronischen Dateien verbessert.

In einer Ausführungsform ist die computerimplementierte Vorrichtung weiter eingerichtet, um Blättern Benutzerkonten zuzuordnen, welche eines oder mehrere der folgenden Merkmale ermöglichen: Beschreibung der elektronischen Datei; Beschreibung der Hashfunktion, mit welcher der Hash der elektronischen Datei gebildet wurde; und zusätzliche Bemerkungen. Dadurch wird die Benutzung für den Benutzer vereinfacht.

In einer Ausführungsform ist die computerimplementierte Vorrichtung weiter eingerichtet, um Knoten auf mehreren eigenständigen Servern zu verteilen. Dadurch werden die Sicherheit und/oder Leistungsfähigkeit verbessert.

Bei einem erfindungsgemässen computerimplementierten Verfahren zur Überprüfung der Integrität von elektronischen Dateien wird eine Baumstruktur definiert, welche ausgehend von einer Wurzel in mehrere Knoten und in mehrere Blätter verzweigt, wobei den Blättern jeweils Benutzerkonten zugeordnet sind, in welchen Datei-Hashes von elektronischen Dateien eines betreffenden Benutzers abspeicherbar sind, und es wird ein der Wurzel zugeordneter Tageswert bestimmt entsprechend den Datei-Hashes der Benutzerkonten und entsprechend der Baumstruktur. In einer Ausführungsform des computerimplementierten Verfahrens wird der Tageswert öffentlich publiziert. In einer Ausführungsform des computerimplementierten Verfahrens werden den Knoten Hashes zugeordnet, welche auf Hashes von Knoten oder Blättern basiert, in welche der betreffende Knoten verzweigt, und es wird der Tageswert basierend auf den Hashes der Knoten oder Blätter bestimmt, in welche die Wurzel verzweigt. In einer Ausführungsform des computerimplementierten Verfahrens wird die Baumstruktur in einer Form definiert, bei welcher Knoten in mehreren Ebenen angeordnet sind, wobei insbesondere mindestens zwei Ebenen definiert werden, wobei insbesondere für mindestens einen Knoten mindestens zwei Knoten definiert werden, in welche sich der betreffende Knoten verzweigt

Ein erfindungsgemässes computerlesbares Speichermedium weist computerlesbare Instruktionen auf, die auf einem Computer abgearbeitet werden können, wobei ein oder mehrere Prozessoren des Computers eine Baumstruktur definieren, welche ausgehend von einer Wurzel in mehrere Knoten und in mehrere Blätter verzweigt, wobei den Blättern jeweils Benutzerkonten zugeordnet sind, in welchen Datei-Hashes von elektronischen Dateien eines betreffenden Benutzers abspeicherbar sind, und einen der Wurzel zugeordneten Tageswert bestimmen entsprechend den Datei-Hashes der Benutzerkonten und entsprechend der Baumstruktur.

### Kurze Erläuterung zu den Figuren

Die Erfindung soll nachfolgend anhand von Ausführungsbeispielen im Zusammenhang mit den Zeichnungen näher erläutert werden. Es zeigen:
- Fig. 1: schematisch eine erfindungsgemässe computerimplementierte Vorrichtung, welche eine Baumstruktur umfasst;
- Fig. 1a, 1b: schematisch eine erfindungsgemässe computerimplementierte Vorrichtung, die auf einem einzelnen Servercomputer bzw. auf zwei Servercomputer implementiert ist;
- Fig. 2: schematisch ein konkretes Beispiel einer erfindungsgemässen computerimplementierten Vorrichtung und deren Anwendung; und
- Fig. 3a, 3b: schematisch die Angaben eines Audits zur Überprüfung der Integrität einer elektronischen Datei.

### Wege zur Ausführung der Erfindung

Die vorliegend dargestellte computerimplementierte Vorrichtung sowie das computerimplementierte Verfahren können ausgeführt werden unter Benutzung eines computerlesbaren, nicht-flüchtigen Speichermediums, welches computerlesbare Instruktionen aufweist, die auf einem Computer abgearbeitet werden können, wobei die Instruktionen mit dem Computer die hier dargestellte computerimplementierte Vorrichtung zur Verfügung stellen, oder wobei beim Abarbeiten der Instruktionen auf dem Computer das hier dargestellte computerimplementierte Verfahren ausgeführt wird. Der Computer weist dazu insbesondere einen oder mehrere Prozessoren auf zur Abarbeitung von Instruktionen, entsprechende Schnittstellen, wie beispielsweise zur Interaktion mit Benutzern, Anzeigegeräten, Netzwerken, etc. In einer Ausführungsform umfasst die computerimplementierte Vorrichtung einen handelsüblichen Computer, auf welchem entsprechende Softwareprogramme installiert sind. Das computerlesbare, nicht-flüchtige Speichermedium kann eine Festplatte, eine SSD (Solid State Disk), einen Netzwerkspeicher, eine CD-ROM, etc. umfassen. In einer Ausführungsform ist die vorliegend dargestellte computerisierte Vorrichtung in einer virtuellen Umgebung implementiert.

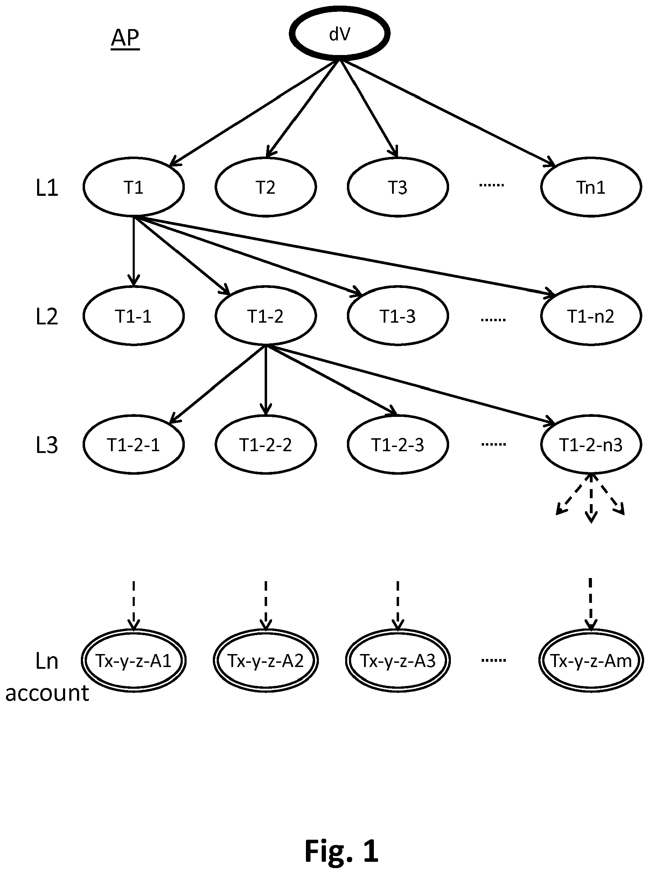

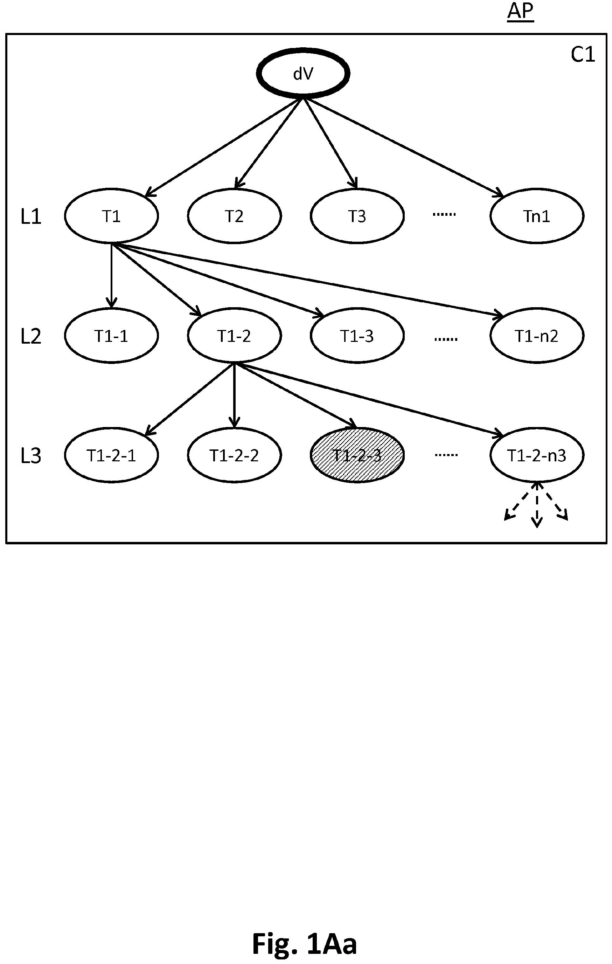

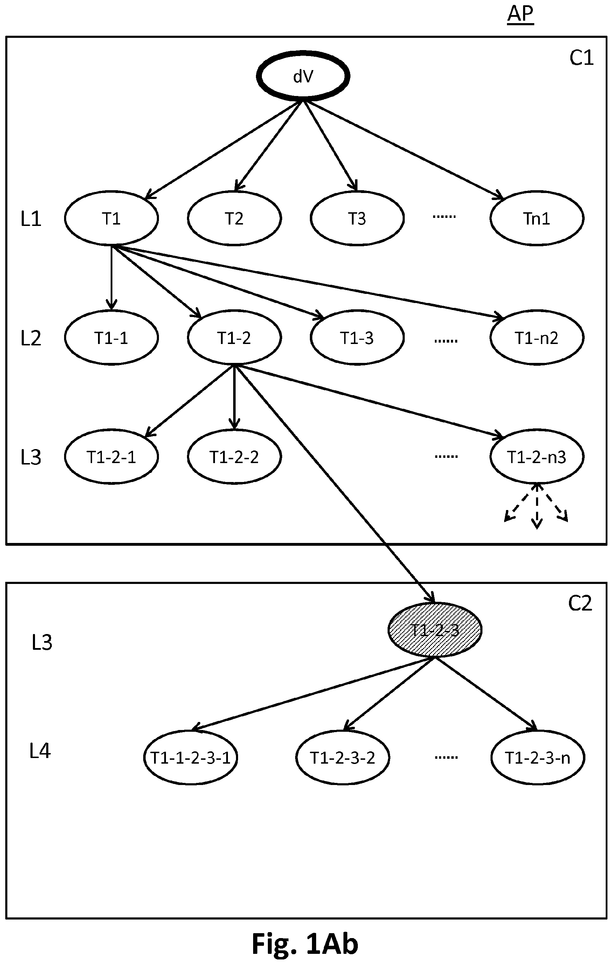

Figur 1 illustriert schematisch Bestandteile einer erfindungsgemässen computerimplementierten Vorrichtung, welche vorliegend auch als Auditplattform AP bezeichnet wird. Die Auditplattform AP umfasst eine Baumstruktur ("tree"), welche eine einzelne Wurzel dV aufweist, die in mehrere darunter liegende Ebenen L1, L2, L3, ... Ln-1 ("level") mit weiteren Knoten verzweigt. Der Wurzel dV ist ein AP-Tages-Hash ("daily value") zugeordnet, der weiter unten beschrieben wird. Der AP-Tages-Hash wird vorliegend auch als Tageswert bezeichnet. Die Wurzel dV verzweigt in die in der Ebene L1 angeordneten Knoten T1, T2, T3, ..., Tn1, welche jeweils in die in der Ebene L2 angeordneten Knoten verzweigen, welche wiederum in die in der Ebene L3 angeordneten Knoten verzweigen, usw. Figur 1 illustriert die in der Ebene L2 angeordneten Knoten T1-1, T1-2, T1-3, ..., T1-n12, in welche der in der Ebene L1 angeordnete Knoten T1 verzweigt. Aus Gründen der besseren Übersichtlichkeit illustriert Figur 1 nicht die in der Ebene L2 angeordneten weiteren Knoten, in welche die anderen Knoten T2, T3, ..., Tn1 der Ebene L1 verzweigen. Figur 1 illustriert weiter, dass der Knoten T1-2 der Ebene L2 in die Knoten T1-2-1, T1-2-2, T1-2-3, ..., T1-2-n123 verzweigt. Aus Gründen der besseren Übersichtlichkeit illustriert Figur 1 wiederum nicht die in der Ebene L3 angeordneten weiteren Knoten, in welche die anderen Knoten T1-1, T1-3, ..., T1-n12 der Ebene L2 verzweigen. In einer weiteren Ebene Ln sind die Blätter Tx-y-z-A1, Tx-y-z-A2, Tx-y-z-A3, ..., Tx-y-z-Am angeordnet, welchen jeweils je ein Benutzerkonto ("accounts") zugewiesen ist. Die Baumstruktur kann in der Breite und in der Anzahl Ebenen beliebig wachsen, wie dies mit den Variablen n, n1, n12, n123, m, etc., denen natürliche Zahlen zugeordnet sind, angedeutet ist. Unterschiedliche Knoten der Baumstruktur können eine unterschiedliche Anzahl von Ebenen nach sich ziehen, so dass beispielsweise das Blatt Tx-y-z-A1 über eine andere Anzahl Ebenen L1, L2, L3, ..., Ln-1 mit dem Wurzelkonten dV verbunden sein kann als beispielsweise das Blatt Tx-y-z-A2.

Bevorzugt umfasst die Baumstruktur mindestens zwei Ebenen.

Die Auditplattform AP ist eingerichtet, dass beim Eröffnen eines neuen Benutzerkontos ein neues Blatt Tx-y-z-A1, Tx-y-z-A2, Tx-y-z-A3, ..., Tx-y-z-Am generiert wird. Durch das Wachstum der Anzahl Benutzer verändert sich somit die Baumstruktur. Falls ein vordefiniertes Maximum m Blätter Tx-y-z-A1, Tx-y-z-A2, Tx-y-z-A3, ..., Tx-y-z-Am in der Ebene Ln erreicht wird, dann wird die Baumstruktur erweitert. In der Ebene Ln-1 unmittelbar oberhalb der Ebene Ln mit den Blättern Tx-y-z-A1, Tx-y-z-A2, Tx-y-z-A3, ..., Tx-y-z-Am befinden sich die sog. Blatt-Knoten. Beim Erreichen des erwähnten Maximums erstellt ein betreffender Knoten in der Ebene Ln-2 über der Ebene Ln-1 mit den Blatt-Knoten in der Ebene Ln-1 einen weiteren Blatt-Knoten. Falls allerdings ein vordefiniertes Maximum an Blatt-Knoten erreicht ist, dann wird statt eines weiteren Blatt-Knotens ein Knoten in der Ebene Ln-1 erstellt, welcher in der Ebene Ln Blatt-Knoten generiert, die dann Blätter in einer neuen Ebenen Ln+1 generieren. Je nach den weiter unten erwähnten Funktionen der Knoten, können sich die erwähnten vordefinierten Maxima ändern. Durch das Eröffnen von neuen Benutzerkonten verändert sich somit die Baumstruktur sowohl in der Breite als auch in der Anzahl Ebenen.

Die Baumstruktur der Auditplattform AP kann auf einem einzelnen Servercomputer C1 oder auf mehreren Servercomputer C1, C2, ... implementiert sein. Figur 1A illustriert, wie die Baumstruktur zunächst auf einem ersten Servercomputer C1 implementiert ist. Figur 1B illustriert, wie ein Knoten T1-2-3 der Baumstruktur auf einen zweiten Servercomputer C2 transferiert ist, wobei sich die Baumstruktur über den ersten Servercomputer C1 und den zweiten Servercomputer C2 erstreckt. Die aus dem Knoten T1-2-3 verzweigenden Knoten T-1-2-3-1, T-1-2-3-2, ... T-1-2-3-n sind auf dem zweiten Servercomputer implementiert.

Es gibt diverse Gründe einen Knoten zu transferieren. Beispielsweise kann ein bestimmter Knoten zu viele Ressourcen binden und die Laufzeiten der Auditplattform AP gefährden.

Ein Knoten kann auch transferiert bzw. separiert werden, um spezielle Blatt- oder Knoten-Funktionen weitergeben zu können. Dies kann eine vergrösserte Anzahl Blätter eines Blatt-Knotens betreffen. Dies kann einen Knoten betreffen, der um Funktionen erweitert ist, die in die darunter liegenden Knoten, Blatt-Knoten und Blätter vererbt werden sollen. Beispielsweise kann die Auditplattform AP einer breiten Öffentlichkeit bis zu einem vordefinierten Limit frei zur Verfügung stehen, während bestimmte Servercomputer ein Abrechnungssystem umfassen für eine kommerzielle Nutzung für Industriebetriebe, Dienstleistungsbetriebe, etc. Beispielsweise können Knoten unterschiedlicher Servercomputer Audits erstellen gemäss unterschiedlicher Kriterien wie z.B. nach unterschiedlichen Zeitintervallen. Beispielsweise können Knoten unterschiedlicher Servercomputer unterschiedliche Webdarstellungen für Account-Gruppen und/oder Schnittstellen aufweisen. Beispielsweise können Knoten oder Servercomputer die über öffentliche Links bekannt gemacht sind ein grosses Aufkommen an Besucher erfahren, wobei diese Besucher mit separaten, dafür spezialisierten Servercomputer gemäss einer vordefinierten Antwortzeit bedient werden können.

Spezialisierte oder auf eigene Server ausgelagerte Knoten beeinflussen den weiter unten beschriebenen Fluss von Auditdaten nicht.

Die Auditplattform AP ist somit eingerichtet, dass ein Benutzer ein Benutzerkonto eröffnen kann, welches einem neu generierten Blatt der Blätter Tx-y-z-A1, Tx-y-z-A2, Tx-y-z-A3, ..., Tx-y-z-Am zugeordnet ist. Das Benutzerkonto ist eingerichtet, dass der Benutzer Hashwerte einer Hashfunktion registrieren bzw. abspeichern kann. Die Hashfunktion wird auf eine elektronische Datei angewendet, für welche der Benutzer die Integrität sicherstellen möchte. Für diese Hashfunktion ist eine Kollisionsresistenz nicht von Relevanz. Beispielsweise für ein Textdokument, welches der Benutzer verfasst hat, kann der Benutzer zu einem bestimmten früheren Zeitpunkt X mittels einer beliebigen Hashfunktion einen Hashwert des Textdokuments, welcher Hashwert vorliegend auch als Datei-Hash bezeichnet wird, im Benutzerkonto abspeichern. Der Benutzer muss den Hashwert bei sich nicht weiter notieren, muss aber ab diesem Moment sicherstellen, dass das originale Textdokument bzw. die originale elektronische Datei sicher abgespeichert bleibt, insbesondere unverändert abgespeichert bleibt.

Die Auditplattform AP ist eingerichtet, um einen in einem Benutzerkonto abgespeicherten Datei-Hash mit dem aktuellen Zeitstempel zu versehen und mit einer AP-Hashfunktion einen AP-Datei-Hash zu erstellen. Dabei ist die AP-Hashfunktion mindestens schwach kollisionsresistent.

Die Auditplattform AP ist eingerichtet, um entsprechend der Baumstruktur den der Wurzel dV zugeordneten Tageswert bzw. den AP-Tages-Hash zu bestimmen. Jedem Knoten der Baumstruktur ist ein AP-Knoten-Tages-Hash zugeordnet, welcher insbesondere mit Hashes der AP-Knoten-Tages-Hashes oder der AP-Account-Tages-Hashes seiner Verzweigungen gebildet wird. Ausgehend von den Blättern Tx-y-z-A1, Tx-y-z-A2, Tx-y-z-A3, ..., Tx-y-z-Am der Ebene Ln werden aus den in den Benutzerkonten abgespeicherten AP-Account-Tages-Hashes die AP-Knoten-Tages-Hashes von darüber liegenden Knoten der Ebene Ln-1 gebildet (wobei die betreffenden Blätter aus diesen darüber liegenden Knoten der Ebene Ln-1 verzweigen). Ausgehend von den Knoten der Ebene Ln-1 werden entsprechend den Verzweigungen die AP-Knoten-Tages-Hashes der Ebene Ln-2 gebildet. Dies wird über alle Ebenen Ln, ..., L3, L2, L1 der Baumstruktur durchgeführt, bis schliesslich aus den AP-Knoten-Tages-Hashes der Knoten der Ebene L1 der der Wurzel dV zugeordnete Tageswert bzw. der AP-Tages-Hash gebildet wird.

Die Auditplattform AP ist eingerichtet, um den der Wurzel dV zugeordneten Tageswert bzw. den AP-Tages-Hash öffentlich zugänglich abzuspeichern, wobei sichergestellt wird, dass der AP-Tages-Hash auf alle Zeit für jedermann frei einsehbar ist. Eine spätere Manipulation des Tageswerts bzw. des AP-Tages-Hashes wird dadurch verhindert. Das öffentliche Publizieren kann auf einer Webseite erfolgen, in einer gedruckten Zeitung, etc. In einer Ausführungsform ist die Auditplattform AP eine Webseite, wobei der Tags-Hash das dominante Merkmal der Webseite ist.

Die Auditplattform AP ist eingerichtet, um die Überprüfung einer elektronischen Datei auf seine Originalität bzw. Integrität sicherzustellen. Der Anfragende erhält einen Hash-Pfad von einem betreffenden Hash bis zum öffentlichen AP-Tages-Hash, inklusive genauer Zeitangabe. Wie nachfolgend noch erläutert wird, kann dieser Pfad jede Person auf seine Richtigkeit prüfen und nachvollziehen. Anfragen können vom Eigentümer des Benutzerkontos vorgenommen werden, oder der Eigentümer kann den Zugang einer Drittperson für Anfragen freigeben.

Die Auditplattform AP kann eine Webschnittstelle umfassen, welche es einem Benutzer ermöglicht, einzelne Datei-Hashes zu erfassen. Die Auditplattform AP kann auch maschinell zugreifbare Schnittstellen aufweisen, welche die automatisierte Übermittlung von Datei-Hashes ermöglicht, z.B. für Firmenanwendungen.

Die Auditplattform AP kann eingerichtet sein, um Hashes so zu hinterlegen, dass diese via einen Link abgefragt werden können. Dies kann es dem Empfänger einer elektronischen Datei ermöglichen, diese auf Integrität bzw. Echtheit zu überprüfen. Dadurch kann eine Alternative zu den zum Teil unsicheren Zertifikaten geschaffen werden. Die Auditplattform AP kann eine grosse Akzeptanz erlangen und schnelle Audits können ermöglicht werden durch Plugins/Addons oder Standardisierung. Beispielsweise kann beim Versenden von E-Mails und Attachements der Hash auf der Auditplattform AP angeliefert werden und dann bereits nahezu in Echtzeit abgefragt werden. Audits können auch zu einem späteren Zeitpunkt Echtheit und Zeitpunkt von E-Mails und Attachements belegen.

Die Auditplattform AP kann eingerichtet sein, solche Links in öffentliche, halbprivate und private Links zu unterteilen. Der Zweck soll ein Ausbau auch für Echtzeitkommunikation sein, wo entsprechende Plugins in Programmen auf Echtzeit verifiziert werden können. Öffentliche Links, welche für jedermann zugänglich gemacht sind, können von Firmen genutzt werden, welche Software zum Download anbieten, wobei jedermann den Download verifizieren kann. Der Audit von öffentlichen Links kann Echtheit und Zeitpunkt belegen. Der Audit von öffentlichen Links kann zusätzlich Version, Firma, etc. bestätigen. Beispielsweise können die Blätter, denen die Accounts der Firmen zugeordnet sind, aus einem gemeinsamen Knoten verzweigen, welcher Knoten die betreffenden Funktionen nach unten vererbt. Gegen oben können die Knoten die üblichen Informationen weitergeben. Bei einer Echtzeitverifikation wie beispielsweise bei einer E-Mail-Kommunikation können die Links systemgeneriert und maschinenlesbar sein und nicht für die Öffentlichkeit oder Dritte bestimmt sein, d.h. es können private Links vorgesehen sein. Knoten für private Links können sehr viele Knoten und Blätter generieren und eingerichtet sein, um schnelle Zwischen-Audits zu erstellen. Gegen oben können die gesammelten Daten für den Tages-Hash wie üblich weitergegeben werden. Bei einem späteren vollständigen Audit einer E-Mail fällt der Pfad entsprechend länger aus.

Jeder Knoten der Baumstruktur der Auditplattform AP kann eigenständig arbeiten. Einzelne Knoten können in eigenständigen Servern arbeiten, insbesondere bei Wachstum der Auditplattform AP. Die Auditplattform AP kann somit einen Verbund von eigenständigen Servern umfassen, wobei in diesem Fall davon gesprochen werden kann, dass die Auditplattform AP nicht eine einzelne Vorrichtung, sondern ein System oder einen Verbund von Vorrichtungen umfasst. Es muss sichergestellt sein, dass der jeweils übergeordnete Knoten für die Bearbeitung bereit sein muss, insbesondere bei Übergabe im Rahmen der Erstellung eines AP-Tages-Hashes und bei einem nachfolgend noch erläuterten Audit im Rahmen der Überprüfung der Integrität einer elektronischen Datei. Von dieser Eigenständigkeit können die Verwaltungsfunktionen der Auditplattform AP zur Verwaltung der Benutzerkonten ausgenommen sein, welche die Zuordnung zu den Blättern abspeichern und welche Verwaltungsfunktionen auf die abgespeicherten Konfigurationen zugreifen müssen.

Die Auditplattform AP kann Tools umfassen, mit welchen der Benutzer einen Datei-Hash erstellen kann. Der Benutzer kann eines dieser Tools benutzen, oder ein beliebig anderes Tool benutzen.

Die Auditplattform AP erfordert nur, dass der Benutzer den Datei-Hash der betreffenden elektronischen Datei im Benutzerkonto registriert bzw. abspeichert. Die Auditplattform AP kann eingerichtet sein, dass der Benutzer weitere Angaben registrieren bzw. abspeichern kann. Benutzerkonten der Auditplattform AP können eingerichtet sein, dass der Benutzer ein Stichwort oder Name registrieren bzw. abspeichern kann, welches die elektronische Datei bezeichnet und ermöglicht, dass die elektronische Datei und der entsprechende Datei-Hash wiedergefunden werden kann. Benutzerkonten der Auditplattform AP können eingerichtet sein, dass der Benutzer die benutzte Hashfunktion registrieren bzw. abspeichern kann, so dass der Benutzer zu einem späteren Zeitpunkt Y daran erinnert werden kann, mit welcher Hashfunktion der Datei-Hash erstellt wurde. Benutzerkonten der Auditplattform AP können eingerichtet sein, dass der Benutzer Bemerkungen registrieren bzw. abspeichern kann, um betreffende Bemerkungen festzuhalten. Benutzerkonten der Auditplattform AP können eingerichtet sein, dass der Benutzer weitere Angaben registrieren bzw. abspeichern kann.

Die Auditplattform AP kann eingerichtet sein, dass eine sichere, verschlüsselte Datenhinterlegung in Datensafes ermöglicht ist, welche Datensafes von Benutzern der Auditplattform AP eingerichtet werden können und welche Datensafes unabhängig sind von einem Audit. Die Datensafes sind jedoch dem betreffenden Benutzerkonto zugeordnet. Die Datensafes können eingerichtet sein, um die Daten, über welche der Benutzer den Hash angewendet hat, verschlüsselt oder original abzulegen. Die Auditplattform AP ist damit um eine zusätzliche Dienstleistungsfunktion erweitert, welche dem Benutzer die Möglichkeit gibt, auditwürdige Daten zu hinterlegen, insbesondere damit diese nicht verloren gehen.

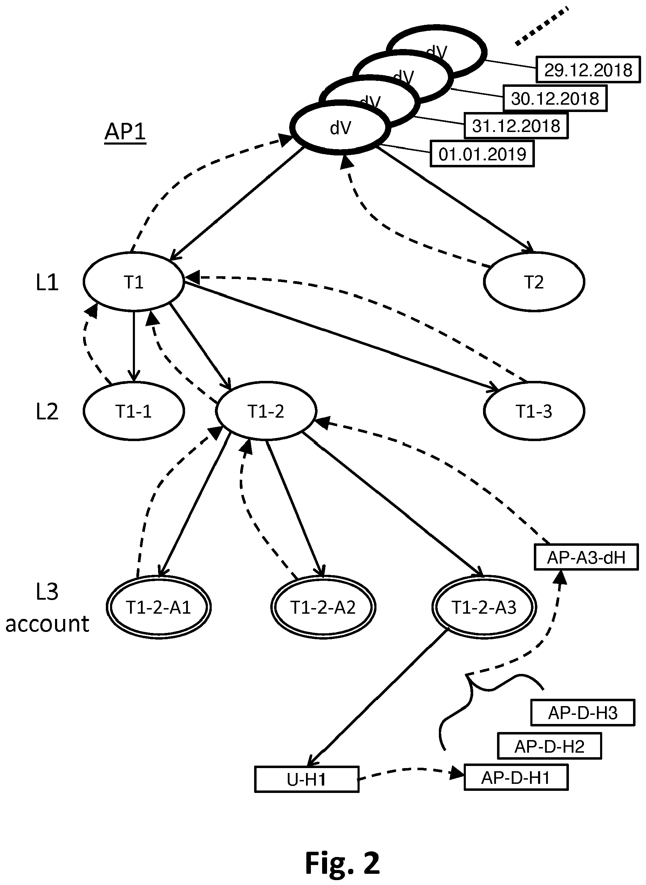

Figur 2 illustriert schematisch Bestandteile eines konkreten Ausführungsbeispiels einer computerimplementierten Vorrichtung und eines computerimplementierten Verfahrens zur Überprüfung der Integrität von elektronischen Dateien. Dieses konkrete Ausführungsbeispiel wird vorliegend auch als Auditplattform AP1 bezeichnet, welche ein konkretes Beispiel der oben allgemeiner erläuterten Auditplattform AP illustriert. Die nachfolgenden Erläuterungen in Verbindung dem konkreten Ausführungsbeispiel gemäss Auditplattform AP1 finden sinngemäss Anwendung in Verbindung mit der allgemeineren Auditplattform AP.

Die Auditplattform AP1 ist eingerichtet, um die in Figur 2 schematisch illustrierte Baumstruktur zu definieren. Die Baumstruktur umfasst eine Wurzel dV, welcher ein Tageswert bzw. AP-Tages-Hash zugeordnet wird.

Wie in Figur 2 schematisch illustriert ist, kann gemäss den nachfolgenden Darstellungen der Wurzel dV an jedem Tag ein Tageswert zugeordnet werden. So kann ein Tageswert am 01.01.2019 erstellt werden, ein Tageswert am 31.12.2018 erstellt werden, ein Tageswert am 30.12.2018 erstellt werden, ein Tageswert am 29.12.2018 erstellt werden, etc. Die Auditplattform AP kann eingerichtet sein, um die Tageswerte öffentlich zu publizieren, beispielsweise auf einem öffentlich zugänglichen Speichermedium abzuspeichern, um sicherzustellen, dass eine Manipulation von Tageswerten festgestellt werden kann.

Wie in Figur 2 schematisch illustriert ist, verzweigt die Wurzel dV in zwei Knoten T1, T2, welche sich in einer ersten Ebene L1 befinden. Wie in Figur 2 schematisch illustriert ist, verzweigt sich der Knoten T1 in drei Knoten T1-1, T1-2, T1-3, welche sich in einer zweiten Ebene L2 befinden. In Figur 2 ist aus Gründen der besseren Übersichtlichkeit nicht illustriert, in welche weiteren Knoten der Knoten T2 verzweigt.

Wie in Figur 2 schematisch illustriert ist, verzweigt der Knoten T1-2 in drei Blätter T1-2-A1, T1-2-A2, T1-2-A3, welche sich in einer dritten Ebene L3 befinden und denen jeweils ein Benutzerkonto zugeordnet sind. In Figur 2 ist aus Gründen der besseren Übersichtlichkeit nicht illustriert, in welche weiteren Knoten oder Blätter die anderen Knoten T1-1, T1-3 der Ebene L2 verzweigen.

Wie in Figur 2 schematisch illustriert ist, ist der der Wurzel dV zugeordnete Tageswert bzw. AP-Tages-Hash das Resultat einer Hashfunktion, welche auf AP-Tages-Hashes angewendet wird, die den Knoten T1, T2 zugeordnet sind. Der dem Knoten T1 zugeordnete AP-Tages-Hash ist das Resultat einer Hashfunktion, welche auf AP-Tages-Hashes angewendet wird, die den Knoten T1-1, T1-2, T1-3 zugeordnet sind. Der dem Knoten T1-2 zugeordnete AP-Tages-Hash ist das Resultat einer Hashfunktion, welche auf AP-Account-Tages-Hashes angewendet wird, die in den Benutzerkonten der Blätter T1-2-A1, T1-2-A2, T1-2-A3 zugeordnet sind. In Figur 2 ist aus Gründen der besseren Übersichtlichkeit nicht illustriert, aus welchen Hashes von Knoten oder Benutzerkonten die den Knoten T2, T1-1, T1-3 zugeordneten AP-Knoten-Tages-Hashes gebildet sind.

So hat zum Beispiel Herr Muster aus der Schweiz am 1. Januar 2019 einen genialen Text verfasst. In diesem Fall nehmen wir als Beispiel, dass der geniale Text nur das Wort "Hallo" umfasst ohne sonstige Zeichen. Diesen Text hat Herr Muster in eine Textdatei gespeichert. Um einen Datei-Hash zu generieren nimmt Herr Muster die MD5 Funktion. Dabei entsteht folgender Datei-Hash: d1bf93299de1b68e6d382c893bf1215f. In Figur 2 ist dementsprechend der Eintrag im Benutzerkonto U-H1 illustriert. U-H1 umfasst die folgenden Informationen:
Datei-Hash: d1bf93299de1b68e6d382c893bf1215f; UTC Time 2019-01-01 11-13-14;
Name: geniale Idee; Hash: MD5.

Als Hashfunktion kann statt der Hashfunktion MD5 irgendeine andere Hashfunktion zur Anwendung kommen, beispielsweise MD2, MD4, SHA, RIPEMD-160, Tiger, HAVAL, Whirlpool, etc. (https://de.wikipedia.org/wiki/Hashfunktion). Wie erwähnt, muss diese Hashfunktion nicht kollisionsresistent sein.

Den Eintrag U-H1 im Benutzerkonto erstellt Herr Muster um 12:13:14 Uhr und speichert diesen im entsprechenden Benutzerkonto der Auditplattform AP1. Dieses Benutzerkonto ist wie in Figur 2 illustriert dem Blatt T1-2-A3 zugeordnet. Wie erwähnt hat sich Herr Muster als Name «geniale Idee» vermerkt und bei der Hashfunktion MD5 eingetragen. Das ist alles. Herr Muster speichert sich seine Textdatei auf ein Backup und/oder in die Cloud. Den mit der MD5 Hashfunktion generierten Datei-Hash kann Herr Muster wieder löschen und vergessen.

Die Auditplattform AP1 kann beispielsweise mit der Hashfunktion SHA-256 arbeiten. Die Hashfunktion der Auditplattform AP1 wird vorliegend auch als AP-Hashfunktion bezeichnet. Statt der Hashfunktion SHA-256 kann irgendeine andere zumindest schwach kollisionsresistente Hashfunktion verwendet werden.

Die Auditplattform AP1 ist eingerichtet, um dem Hash von Herr Muster den UTC Zeitstempel hinzuzufügen: d1bf93299de1b68e6d382c893bf1215f; 2019-01-01 11:13:14. Daraus wird mittels der AP-Hashfunktion der AP-Datei-Hash AP-D-H1 generiert: 3e9b25a7c14654ad524716b1db42e26a9f7c528cbc7631395b225aa42a01f92a.

Die Auditplattform AP1 ist eingerichtet, um aus dem AP-Datei-Hash beispielsweise nach Mitternacht den AP-Account-Tages-Hash AP-A3-dH zu generieren. Wie in Figur 2 illustriert und weiter oben erläutert, wird der AP-Account-Tages-Hash AP-A3-dH dem Knoten T1-2 zugeführt, um zusammen mit weiteren Hashes den dem Knoten T1-2 zugeordneten AP-Knoten-Tages-Hash zu bilden. Dies wird wie oben erläutert weitergeführt, um den Tageswert dV oder AP-Tages-Hash zu bilden. In einer Ausführungsform basiert der AP-Account-Tages-Hash auf einem AP-Account-Group-Hash, wie nachfolgend noch ausgeführt wird.

Zu einem späteren Zeitpunkt Y, beispielsweise drei Jahre später, kann Herr Muster gegenüber einem Nachmacher beweisen, dass dessen vermeintliche "Genial Idee" nicht neu ist, sondern von Herr Muster schon zu einem früheren Zeitpunkt, nämlich am 01.01.2019, in der bei Herr Muster gespeicherten Textdatei beschrieben wurde. Neben dem fälschungssicheren Hash-Pfad - auf welchen wir später noch zurückkommen - wird Herrn Muster sein gespeicherter Hash U-H1 mit den Anmerkungen vorgelegt.

Daraus erkennt Herr Muster zu diesem späteren Zeitpunkt Y, dass er vor 3 Jahren die MD5-Funktion benutzt hat. Mit dem Audit der Auditplattform AP1 und seiner Textdatei von dazumal, kann er unumstösslich beweisen, dass seine Textdatei seit 3 Jahren unverändert ist. Dies kann auch ein Dritter selbständig nachprüfen, der berechtigt ist mit der Auditplattform AP1 ein Audit durchzuführen und vom der Textdatei den geforderten Hash zu generieren.

Figur 2 illustriert schematisch, wie ein Hash-Pfad angelegt sein kann. Das Benutzerkonto von Herrn Muster ist dem Blatt T1-2-A3 der Ebene L3 zugeordnet. Herr Muster hat in diesem Benutzerkonto wie erwähnt den Hash der Textdatei abgelegt, welche seine geniale Idee beschreibt. Der Hash-Pfad ist in diesem Fall: Textdatei -> Blatt T1-2-A3 -> Knoten T1-2 -> Knoten T1 -> Tageswert dV.

In Bezug auf das Blatt T1-2-A3 illustriert Figur 2, dass Herr Muster im 2018 schon weitere Hashes von anderen elektronischen Dateien abgespeichert hat. Diese werden am 01.01.2019 zusammen mit dem Datei-Hash der Textdatei neu gehashed, woraus der AP-Account-Group-Hash gebildet wird, auf welchem der aktuelle AP-Account-Tages-Hash basiert, welcher dem Blatt T1-2-A3 zugeordnet ist. Der aktuelle AP-Account-Tages-Hash des Blatts T1-2-A3 wird an den Knoten T1-2 weitergegeben, aus welchem das Blatt T1-2-A3 verzweigt.

In Bezug auf den Knoten T1-2 der Ebene L2 der Figur 2 wird der diesem Knoten T1-2 zugeordnete aktuelle AP-Knoten-Tages-Hash aus den aktuellen AP-Account-Tages-Hashes der Blätter T1-2-A1, T1-2-A2, T1-2-A3, in welche der Knoten T1-2 verzweigt, sowie dem vormaligen AP-Knoten-Tages-Hash des Knotens T1-2 gebildet. Der aktuelle Knoten-Tages-Hash des Knotens T1-2 wird an den Knoten T1 weitergegeben, aus welchem der Knoten T1-2 verzweigt.

In Bezug auf den Knoten T1 der Ebene L1 der Figur 2 wird der diesem Knoten T1 zugeordnete aktuelle AP-Knoten Tages-Hash aus den aktuellen AP-Knoten-Tages-Hashes der Knoten T1-1, T1-2, T1-3, in welche der Knoten T1 verzweigt, sowie dem vormaligen AP-Knoten-Tages-Hash des Knotens T1 gebildet. Der aktuelle Knoten-Tages-Hash des Knotens T1 wird an die Wurzel dV weitergegeben, aus welcher der Knoten T1 verzweigt.

In Bezug auf die Wurzel dV der Figur 2 wird der der Wurzel dV zugeordnete aktuelle AP-Tages-Hash aus den aktuellen AP-Tages-Hashes der Knoten T1, T2, in welche die Wurzel dV verzweigt, sowie dem vormaligen AP-Tages-Hash der Wurzel dV gebildet. Wie erwähnt wird der AP-Tages-Hash vorliegend auch als Tageswert bezeichnet. Wie erwähnt, wird der Tageswert bzw. der AP-Tages-Hash öffentlich publiziert.

Beim Bilden von Hashes in den Knoten und der Wurzel wird neben den Hashes der Knoten oder Blätter, in welche die Knoten oder die Wurzel verzweigen, zusätzlich das aktuelle Datum mit gehashed. Dies dient als Referenz beim Audit. Für den AP-Tages-Hash bedeutet dies: (aktuelle AP-Knoten-Tages-Hashes der Knoten der Ebene L1 vom yyyy-mm-dd) + (vormaliger AP-Tages-Hash vom Vortag yyyy-mm-dd minus 1) + (aktuelles Datum yyyy-mm-dd) = (aktueller AP-Tages-Hash vom yyyy-mm-dd).

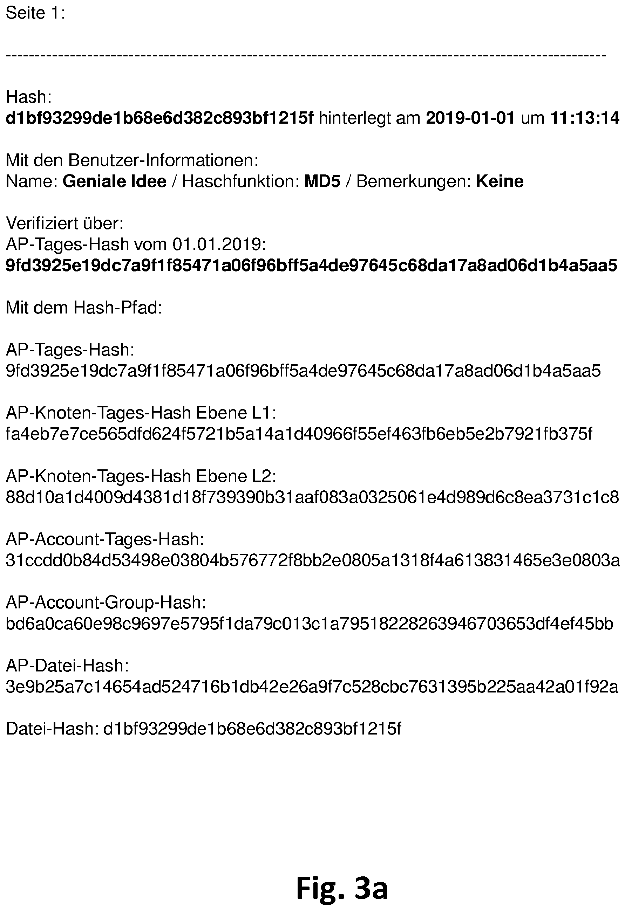

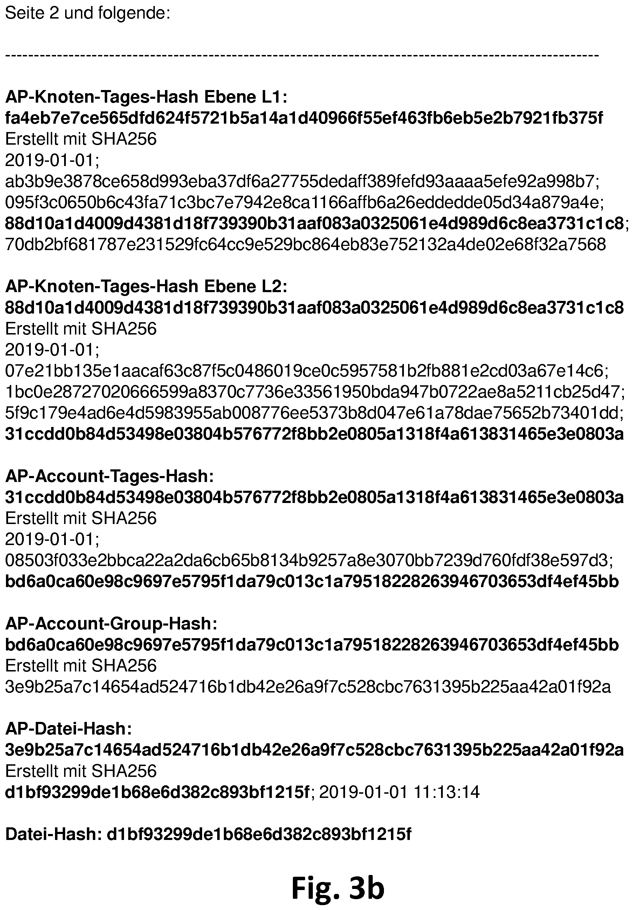

Figuren 3a, 3b illustrieren schematisch die Angaben eines Audits zur Überprüfung der Integrität einer elektronischen Datei, welche Angaben beispielsweise als ausgedrucktes Protokoll vorliegen können. Das Protokoll kann eine Zusammenfassung auf Seite 1 umfassen (Figur 3a) sowie detaillierten Angaben auf Seite 2 und den folgenden Seiten (Figur 3b). Zur besseren Nachvollziehbarkeit können wie in Figuren 3a, 3b illustriert bestimmte Angaben fett markiert sein.

Figuren 3a, 3b illustrieren schematisch die Überprüfung der Integrität der oben erwähnten Textdatei mit dem Inhalt "Hallo". Die Überprüfung der Integrität irgendwelcher elektronischen Dateien erfolgt sinngemäss.

Für die Sicherheit einer Auditplattform AP, AP1 können folgende Massnahmen vorgesehen sein. Einem Benutzerkonto können verschiedene Merkmale wie eine E-Mail Adresse und ein Passwort zugeordnet sein. Bei Verlust des Passworts etc. können übliche Sicherheitsmerkmale zur Anwendung kommen. Die Langzeitverfügbarkeit kann durch bilden von finanziellen Reserven sichergestellt werden, welche auch bei Insolvenz den Betrieb für weitere 5-10 Jahre ermöglichen. Alle Hash Berechnungen können auf zwei Wegen stattfinden und im Resultat verglichen werden (Double Check). Daten können doppelt abgelegt werden, beispielsweise in einer Datenbankstruktur und als Textdatei, welche beim Double Check entsprechend verwendet werden können. Hashes können in erstes Mal in einer Datenbank erfasst werden und ein zweites Mal in einer Textdatei gespeichert werden. Bei der Generierung von übergeordneten Hash Summen wie einem AP-Tages-Hash oder AP-Knoten-Hash können diese auf zwei Arten aus den jeweiligen Quellen berechnet werden. Die Resultate können verglichen werden und beispielsweise programmtechnische Fehler können ausgeschlossen werden. Erweiterungen sind in alle Richtungen möglich, um Geschwindigkeit, Volumen, Redundanz, Kapazität, etc. anzupassen. Knoten können auf eigene Server ausgelagert werden. Knoten und Blätter können eigene Webschnittstellen besitzen. Diese Knoten können über Verzweigungen eigene Audits erstellen und veröffentlichen.

Es lässt sich sagen, dass der Tageswert bzw. AP-Tages-Hash öffentlich publiziert wird, während die Hashes zusammen mit der Baumstruktur innerhalb der Auditplattform AP, AP1 abgespeichert wird für einen späteren Zugriff während eines Audits. Es können aber auch einzelne andere Knoten Veröffentlichungen erfahren, um spezifische Audits zu ermöglichen. Die Wurzeln von mehreren Auditplattformen AP1, AP2, ... können zu Knoten werden und eine neue, übergeordnete Instanz kann zu einer neuen Wurzel werden. Der Grundgedanke ist es, dass ein Knoten (dieser kann auch die Wurzel sein) Informationen nach oben geben kann. Der Knoten behält jedoch seine Existenz als veröffentlichende Instanz der betreffenden Informationen wie z.B. des AP-Tages-Hashes. Mit dem Generieren eines Knotens ist die betreffende Baumstruktur automatisch festgehalten.

Eine Auditplattform AP, AP1 ist hier dargestellt im Rahmen eines täglichen Intervalls zur Erstellung von Tageswerten bzw. AP-Tages-Hashes. Statt eines täglichen Intervalls kann irgendeine andere Zeitspanne zur Anwendung kommen, beispielsweise stündlich, alle sechs Stunden, alle zwei Tage, wöchentlich, monatlich, etc. Es sind auch Zeitspannen denkbar, welche nicht einem regelmässigen Intervall entsprechen, sondern irgendeiner anderen zeitlichen Abstand, welcher beispielsweise an Wochentagen anders definiert sein kann als an Wochenenden oder Feiertagen, etc. Knoten und deren Schnittstellen können spezialisierte Aufgaben übernehmen. So kann ein Blatt auf einen Event reagieren und einen betreffenden Datenstrom nach oben vollziehen bis der verantwortliche Knoten erreicht ist. Dies kann unabhängig sein vom täglichen Strom der Hashwerte nach oben welche die Wurzel dV nach unten auslöst.

### Bezeichnungsliste

- AP: Auditplattform
- AP1: konkretes Ausführungsbeispiel einer Auditplattform
- dV: Wurzel der Baumstruktur
- L1, L2, L3, ..., Ln: Ebenen der Baumstruktur
- T1, T2, T3, ..., Tn1: Knoten einer ersten Ebene L1
- T1-1, T1-2, T1-3, ..., T1-n2: Knoten einer zweiten Ebene L2, welche vom Knoten T1 verzweigen
- T1-2-1, T1-2-2, T1-2-3, ..., T1-2-n3: Knoten einer dritten Ebene L3, welche vom Knoten T1-2 verzweigen
- Tx-y-z-A1, Tx-y-z-A2, Tx-y-z-A3, ..., Tx-y-z-Am: Blätter einer n-ten Ebene Ln, denen Benutzerkonten zugeordnet sind
- T1-2, T1-2-A2, T1-2-A3: Blätter einer dritten Ebene L3, welche vom Knoten T1-2 verzweigen und denen Benutzerkonten zugeordnet sind

## Patentansprüche

1. Computerimplementierte Vorrichtung (AP, AP1) zur Überprüfung der Integrität von elektronischen Dateien, welche computerimplementierte Vorrichtung (AP, AP1) eingerichtet ist,
um eine Baumstruktur zu definieren, welche ausgehend von einer Wurzel (dV) in mehrere Knoten (T1, ...; T1-1, ...; T1-1-1, ...; ...) und in mehrere Blätter (Tx-y-z-A1, Tx-y-z-A2, ..., Tx-y-z-Am) verzweigt, wobei den Blättern (Tx-y-z-A1, Tx-y-z-A2, ..., Tx-y-z-Am) jeweils Benutzerkonten zugeordnet sind, in welchen Datei-Hashes von elektronischen Dateien eines betreffenden Benutzers abspeicherbar sind, und
um einen der Wurzel (dV) zugeordneten Tageswert entsprechend den Datei-Hashes der Benutzerkonten und entsprechend der Baumstruktur zu bestimmen.

2. Computerimplementierte Vorrichtung gemäss Anspruch 1, weiter eingerichtet, um den Tageswert öffentlich zu publizieren.

3. Computerimplementierte Vorrichtung gemäss Anspruch 1 oder 2, weiter eingerichtet, um den Knoten (T1, ...; T1-1, ...; T1-1-1, ...; ...) Hashes zuzuordnen, welche auf Hashes von Knoten (T1, ...; T1-1, ...; T1-1-1, ...; ...) oder Blättern (Tx-y-z-A1, Tx-y-z-A2, ..., Tx-y-z-Am) basiert, in welche der betreffende Knoten (T1, ...; T1-1, ...; T1-1-1, ...; ...) verzweigt, und um den Tageswert basierend auf den Hashes der Knoten (T1, ...; T1-1, ...; T1-1-1, ...; ...) oder Blätter (Tx-y-z-A1, Tx-y-z-A2, ..., Tx-y-z-Am) zu bestimmen, in welche die Wurzel (dV) verzweigt.

4. Computerimplementierte Vorrichtung gemäss einem der Ansprüche 1 bis 3, weiter eingerichtet, um Hashes von elektronischen Dateien abzuspeichern, welche auf einer beliebigen Hashfunktion basieren.

5. Computerimplementierte Vorrichtung gemäss einem der Ansprüche 1 bis 4, weiter eingerichtet, um Knoten zugeordnete Hashes auf der Basis einer Hashfunktion zu bestimmen, welche zumindest schwach kollisionsresistent ist.

6. Computerimplementierte Vorrichtung gemäss einem der Ansprüche 1 bis 5, weiter eingerichtet, um die Baumstruktur in einer Form zu definieren, bei welcher Knoten (T1, ...; T1-1, ...; T1-1-1, ...; ...) in mehreren Ebenen (L1, L2, ..., Ln-1) angeordnet sind.

7. Computerimplementierte Vorrichtung gemäss Anspruch 6, weiter eingerichtet, um mindestens zwei Ebenen (L1, L2) zu definieren.

8. Computerimplementierte Vorrichtung gemäss einem der Ansprüche 1 bis 7, weiter eingerichtet, um für mindestens einen Knoten (T1) mindestens zwei Knoten (T1-1, T1-2, ...) zu definieren, in welche sich der betreffende Knoten (T1) verzweigt.

9. Computerimplementierte Vorrichtung gemäss einem der Ansprüche 1 bis 8, weiter eingerichtet, um Blättern (Tx-y-z-A1, Tx-y-z-A2, ..., Tx-y-z-Am) Benutzerkonten zuzuordnen, welche eines oder mehrere der folgenden Merkmale ermöglichen: Beschreibung der elektronischen Datei; Beschreibung der Hashfunktion, mit welcher der Hash der elektronischen Datei gebildet wurde; und zusätzliche Bemerkungen.

10. Computerimplementierte Vorrichtung gemäss einem der Ansprüche 1 bis 9, weiter eingerichtet, um Knoten (T1, ...; T1-1, ...; T1-1-1, ...; ...) auf mehreren eigenständigen Servern zu verteilen.

11. Computerimplementiertes Verfahren zur Überprüfung der Integrität von elektronischen Dateien, wobei:
eine Baumstruktur definiert wird, welche ausgehend von einer Wurzel (dV) in mehrere Knoten (T1, ...; T1-1, ...; T1-1-1, ...; ...) und in mehrere Blätter (Tx-y-z-A1, Tx-y-z-A2, ..., Tx-y-z-Am) verzweigt, wobei den Blättern (Tx-y-z-A1, Tx-y-z-A2, ..., Tx-y-z-Am) jeweils Benutzerkonten zugeordnet sind, in welchen Datei-Hashes von elektronischen Dateien eines betreffenden Benutzers abspeicherbar sind, und
ein der Wurzel (dV) zugeordneter Tageswert bestimmt wird entsprechend den Datei-Hashes der Benutzerkonten und entsprechend der Baumstruktur.

12. Computerimplementiertes Verfahren nach Anspruch 11, wobei der Tageswert öffentlich publiziert wird.

13. Computerimplementiertes Verfahren nach Anspruch 11 oder 12, wobei den Knoten (T1, ...; T1-1, ...; T1-1-1, ...; ...) Hashes zugeordnet werden, welche auf Hashes von Knoten (T1, ...; T1-1, ...; T1-1-1, ...; ...) oder Blättern (Tx-y-z-A1, Tx-y-z-A2, ..., Tx-y-z-Am) basiert, in welche der betreffende Knoten (T1, ...; T1-1, ...; T1-1-1, ...; ...) verzweigt, und wobei der Tageswert basierend auf den Hashes der Knoten (T1, ...; T1-1, ...; T1-1-1, ...; ...) oder Blätter (Tx-y-z-A1, Tx-y-z-A2, ..., Tx-y-z-Am) bestimmt wird, in welche die Wurzel (dV) verzweigt.

14. Computerimplementiertes Verfahren nach einem der Ansprüche 11 bis 13, wobei die Baumstruktur in einer Form definiert, bei welcher Knoten (T1, ...; T1-1, ...; T1-1-1, ...; ...) in mehreren Ebenen (L1, L2, ..., Ln-1) angeordnet sind, wobei insbesondere mindestens zwei Ebenen (L1, L2) definiert werden, wobei insbesondere für mindestens einen Knoten (T1) mindestens zwei Knoten (T1-1, T1-2, ...) definiert werden, in welche sich der betreffende Knoten (T1) verzweigt

15. Computerlesbares Speichermedium, welches computerlesbare Instruktionen aufweist, die auf einem Computer abgearbeitet werden können, wobei ein oder mehrere Prozessoren des Computers:
eine Baumstruktur definiert, welche ausgehend von einer Wurzel (dV) in mehrere Knoten (T1, ...; T1-1, ...; T1-1-1, ...; ...) und in mehrere Blätter (Tx-y-z-A1, Tx-y-z-A2, ..., Tx-y-z-Am) verzweigt, wobei den Blättern (Tx-y-z-A1, Tx-y-z-A2, ..., Tx-y-z-Am) jeweils Benutzerkonten zugeordnet sind, in welchen Datei-Hashes von elektronischen Dateien eines betreffenden Benutzers abspeicherbar sind, und
einen der Wurzel (dV) zugeordneten Tageswert bestimmt entsprechend den Datei-Hashes der Benutzerkonten und entsprechend der Baumstruktur.
